Europäisches Patentamt

European Patent Office

Office européen des brevets

(19)

(11) Veröffentlichungsnummer : **0 455 678 B1**

(12)

# EUROPÄISCHE PATENTSCHRIFT

(45) Veröffentlichungstag der Patentschrift :
**12.08.92 Patentblatt 92/33**

(51) Int. Cl.$^5$ : **G01D 11/18, F16K 37/00**

(21) Anmeldenummer : **90902233.7**

(22) Anmeldetag : **23.01.90**

(86) Internationale Anmeldenummer :
**PCT/EP90/00125**

(87) Internationale Veröffentlichungsnummer :
**WO 90/08943 09.08.90 Gazette 90/19**

(54) **ANZEIGEVORRICHTUNG FÜR DREHBAR GELAGERTE BAUTEILE.**

(30) Priorität : **25.01.89 DE 8900815 U**

(43) Veröffentlichungstag der Anmeldung :
**13.11.91 Patentblatt 91/46**

(45) Bekanntmachung des Hinweises auf die
Patenterteilung :
**12.08.92 Patentblatt 92/33**

(84) Benannte Vertragsstaaten :
**AT BE CH DE DK ES FR GB IT LI NL SE**

(56) Entgegenhaltungen :
**CH-A- 399 857
CH-A- 495 520
DE-A- 2 042 590
DE-B- 2 147 000
GB-A- 1 401 614
US-A- 4 696 320**

(73) Patentinhaber : **HONEYWELL BRAUKMAN
GMBH
Hardhofweg
W-6950 Mosbach (DE)**

(72) Erfinder : **VOLLMER, Rudolf
Friedrich Hölderlin Str. 23
W-6950 Mosbach (DE)**

(74) Vertreter : **Herzbach, Dieter et al
Honeywell Europe S.A. Holding KG Patent &
License Dept. Kaiserleistrasse 55 Postfach 10
08 65
W-6050 Offenbach am Main (DE)**

## Beschreibung

Die vorliegende Erfindung bezieht sich auf eine Anzeigevorrichtung nach dem Gattungsbegriff des Patentanspruches 1. Eine derartige Anzeigevorrichtung ist aus der DS-PS 2 147 000 bekannt.

Es ist die Aufgabe der vorliegenden Erfindung, eine derartige Anzeigevorrichtung in eine mit Einstellmitteln versehene Federhaube zu integrieren. Die Lösung dieser Aufgabe gelingt gemäß den kennzeichnenden Merkmalen des Patentanspruches 1. Weitere vorteilhafte Ausgestaltungen der erfindungsgemäßen Anzeigevorrichtung sind den Unteransprüchen entnehmbar.

Anhand der einzigen Figur der beiliegenden Zeichnung sei im folgenden die Erfindung näher erläutert. Es zeigen:

Fig. 1 eine teilweise geschnittene Ansicht eines Druckminderers;

Fig. 2 eine Ansicht in Richtung des Pfeils A in Fig. 1; und

Fig. 3 eine Schnittansicht entlang der Linie III-III in Fig. 1.

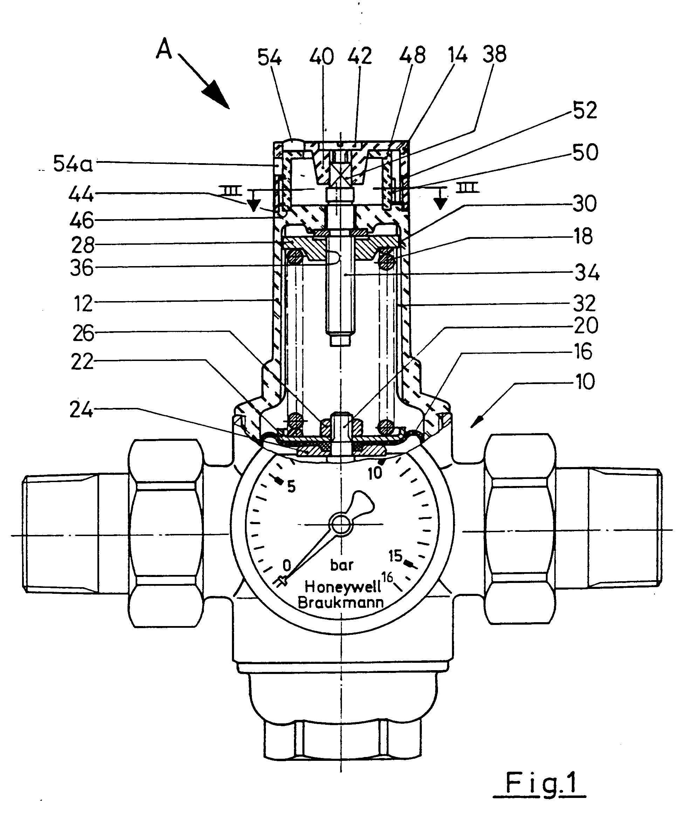

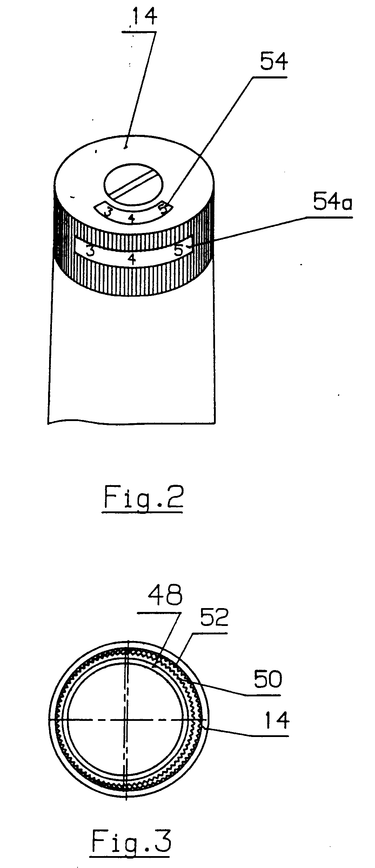

Fig. 1 zeigt einen Druckminderer 10, bei dem der reduzierte Druck auf der Ausgangsseite mittels einer Federhaube 12 und eines Einstell-Drehknopfes 14 vorgegeben wird. Die Federhaube 12 ist in ein Innengewinde des Druckminderer-Ventilgehäuses eingeschraubt und spannt an einem Absatz eine Membran 16 ein, die den ausgangsseitigen Druck mit dem Druck einer einstellbaren Sollwertfeder 18 vergleicht. Eine Ventilspindel 20 durchsetzt eine zentrale Bohrung der Membran 16. Sie ist mit Hilfe zweier oberhalb und unterhalb angeordneter Scheiben 22, 24 und mittels einer Mutter 26 gegenüber der Membran 16 fixiert. Auf der oberen Scheibe 22 liegt das untere Ende der Sollwertfeder 18 auf, deren oberes Ende an einer axial verstellbaren Widerlagerscheibe 28 anliegt. Die Widerlagerscheibe 28 greift mit wenigstens einer Nase 30 in einen achsparallelen Schlitz 32 im Innern der Federhaube 12, und ein axial fixierter Gewindezapfen 34 greift in eine zentrale Gewindebohrung 36 in der Widerlagerscheibe 28. Der Gewindezapfen 34 durchragt die Oberfläche der Federhaube 12 und ist am herausragenden Ende mit einem Vierkant 38 versehen, der von einem Ansatz 40 mit entsprechender Ausnehmung des Einstell-Drehknopfes 14 übergriffen wird. Eine Schraube 42 dient der Befestigung des Drehknopfes 14 mit dem Gewindezapfen 34. Im befestigten Zustand ist der Drehknopf 14 bei seiner Drehung in einer konzentrischen Nut bzw. an einem konzentrischen Absatz 44 in bzw. an der Oberfläche der Federhaube 12 geführt. Eine exzentrische Nut 46 in der Oberfläche der Federhaube 12 dient der Führung eines zylindrischen Abrollgliedes 48. Das Abrollglied 48 trägt an seiner zylindrischen Außenfläche eine Außenverzahnung 50, und der Einstell-Drehknopf 14 weist an seiner hohlzylindrischen Innenfläche eine Innenverzahnung 52 auf. Die Nuten 44 und 46 bewirken einen gegenseitigen Eingriff der Verzahnungen an einer Stelle des Umfanges, die dort vorgegeben ist, wo die exzentrische Nut 46 der konzentrischen Nut 44 am nächsten kommt, wie dies am besten aus Fig. 3 ersichtlich ist.

Das Abrollglied 48 weist gemäß Fig. 2 am Umfang der Außen- oder Oberfläche eine Skala auf, die durch ein Fenster 54a bzw. 54 in der Umfangsseite bzw. auf der Stirnseite des Drehknopfes 14 sichtbar ist. Unter diesen Fenstern 54, 54a dreht sich das die Skala tragende Abrollglied 48, wobei die Skala nur in dem Fenster ablesbar ist. In das Fenster 54, 54a kann eine Scheibe mit einer konvexen Erhebung eingesetzt werden, um einen vergrößernden Lupeneffekt zu erzielen. Es ist ferner möglich, den Drehknopf 14 insgesamt aus transparentem Material herzustellen, und nur im Bereich der Fenster 54, 54a verzerrungsfrei durchsichtig zu gestalten. Die verbleibende Oberfläche kann durch eine Rändelung am Umfang und durch eine Aufrauhung der Oberfläche undurchsichtig gemacht werden.

## Patentansprüche

1. Anzeigevorrichtung für drehbar gelagerte Bauteile mit einem hohlzylindrischen Gehäuse (14) und einem darin exzentrisch gelagerten an die Innenwand des hohlzylindrischen Gehäuses andrückbaren zylindrischen Abrollglied (48), wobei das hohlzylindrische Gehäuse ein Fenster (54) aufweist zur Sichtbarmachung einer auf dem Abrollglied befindlichen Skala, dadurch gekennzeichnet, daß das hohlzylindrische Gehäuse durch den Einstell-Drehkmopf (14) einer Federhaube (12) vorgegeben ist, wobei eine konzentrische und eine exzentrische Nut (44, 46) in der Oberfläche der Federhaube (12) vorgesehen sind, in die der Drehknopf (14) und das Abrollglied (48) eingreifen, um das Abrollglied (48) an einer Stelle in Kontakt mit der Innenwand des Einstell-Drehknopfes (14) zu halten.

2. Vorrichtung nach Anspruch 1, dadurch gekennzeichnet, daß der Einstell-Drehknopf (14) auf der Innenseite des Hohlzylinders und das Abrollglied (48) auf der Außenseite des Zylinders jeweils mit einer Verzahnung (50,52) versehen ist, welche Verzahnungen sich an der Abrollstelle in gegenseitigem Eingriff befinden.

3. Vorrichtung nach Anspruch 2, dadurch gekennzeichnet, daß das zylindrische Abrollglied (48) in seiner Deckfläche mit einer konzentrischen Ausnehmung versehen ist, in die der einstell-Drehknonf (14) mit einem zentralen konischen Ansatz (40) eingreift.

4. Vorrichtung nach Anspruch 3, dadurch gekennzeichnet, daß der Drehknopf (14) am Außenumfang bzw. in der Oberfläche mit einem Fenster (54, 54a) versehen ist und das Abrollglied (48) eine unter dem Fenster vorbeibewegbare Skala aufweist.

5. Vorrichtung nach Anspruch 4, dadurch gekennzeichnet, daß der Drehknopf (14) aus transparentem Material besteht, das im Bereich der Fenster (54, 54a) durchsichtig ist und im übrigen Bereich durch eine Rändelung am Umfang und eine Aufrauhung an der Oberfläche undurchsichtig ist.

**Claims**

1. Indicating device for rotatably mounted component parts comprising a hollow-cylindrical housing (14) and a cylindrical revolving element (48) being eccentrically mounted within and pressable against the interior wall of said hollow-cylindrical housing, whereat the hollow-cylindrical housing comprises a window (54) making visible a scale on said revolving element, characterized in that the hollow-cylindrical housing is provided by the rotary adjustment knob (14) of a spring cap (12), whereat a concentric and an eccentric groove (44,46) are provided in the surface of said spring cap (12), which grooves being engaged by said rotary knob (14) and by said revolving element (48) in order to keep the revolving element (48) at one location in contact with the interior wall of the rotary adjustment knob (14).

2. Device according to claim 12, characterized in that the rotary adjustment knob (14) on the interior side of the hollow cylinder and the revolving element on the external side of the cylinder each are provided with a gear toothing (50,52), with said gear toothings engaging each other at the location of revolving.

3. Device according to claim 2, characterized in that said cylindrical revolving element (48) is provided within its surface with a concentrical cut-out which the rotary adjustment knob (14) engages by means of a central conical projection (40).

4. Device according to claim 3, characterized in that the rotary knob (14) is provided with a window (54,54a) in its outer surface or cover surface, respectively, and that the revolving element (48) bears a scale movable below the window.

5. Device according to claim 4, characterized in that the rotary knob (14) consists of a transparent material which is transmissive in the area of said windows (54,54a) and is opaque in the remaining area by means of a knurling at the outer surface and by means of a roughening on the top surface.

**Revendications**

1. Dispositif d'affichage pour des composants montés rotatifs, comportant un boîtier cylindrique creux (14) et un élément roulant cylindrique (48) qui est monté d'une manière excentrée dans le boîtier et peut être repoussé contre la paroi intérieure du boîtier cylindrique creux, le boîtier cylindrique creux possédant une fenêtre (54) permettant d'observer une échelle située sur l'élément tournant, caractérisé en ce que le boîtier cylindrique creux est formé par le bouton-poussoir de réglage (14) d'un logement de ressort (12), et que dans la surface du logement de ressort (12), il est prévu une gorge concentrique et une gorge excentrée (44,46), dans lesquelles s'engagent le bouton rotatif (14) et l'élément roulant (48) pour maintenir l'élément roulant (48) en contact, en un emplacement, avec la paroi intérieure du bouton rotatif de réglage (14).

2. Dispositif selon la revendication 1, caractérisé en ce que le bouton rotatif de réglage (14) comporte, sur la face intérieure du cylindre creux, une denture (50) et l'élément roulant (48) comporte sur la face extérieure du cylindre, une denture. (52), ces dentures engrenant réciproquement au niveau de la zone de roulement.

3. Dispositif selon la revendication 2, caractérisé en ce que l'élément roulant cylindrique (48) comporte, au niveau de sa surface supérieure, un évidement concentrique, dans lequel le bouton rotatif de réglage (14) s'engage par un embout saillant conique central (40).

4. Dispositif selon la revendication 3, caractérisé en ce que le bouton rotatif (14) comporte, sur son pourtour extérieur ou sur sa surface, une fenêtre (54,54a) et que l'élément roulant (48) possède une échelle qui se déplace derrière la fenêtre.

5. Dispositif selon la revendication 4, caractérisé en ce que le bouton rotatif (14) est réalisé en un matériau transparent, qui est transparent au niveau de la fenêtre (54,54a) et est opaque ailleurs, en raison de la présence d'un moletage sur son pourtour et d'une rugosité de surface.

A

54  40  42  48  14  38

54a

52

50

44

30

46

18

28

34

36

32

12

20

26

16

22

10

24

10

5

15

0  bar

Honeywell
Braukmann

Fig.1

4

Fig.2

Fig.3